# EUROPEAN PATENT APPLICATION

(11) **EP 1 262 896 A2**
(43) Date of publication of application: **04.12.2002**
(21) Application number: 02253865.6
(22) Date of filing: 31.05.2002
(51) Int. Cl.: G06F 17/60

(54) **Electronic coupon method and system**

(30) Priority: 31.05.2001 JP 2001164825
(71) Applicant: Hewlett-Packard Company, Palo Alto, CA 94304 (US)
(72) Inventor: Yuasa, Kei, Setagaya-ku, Tokyo (JP)
(74) Representative: Powell, Stephen David

(57) **Abstract**

A system for issuing, receiving, authenticating and using an e-coupon uses a hand-held consumer terminal, such as a cellular phone. A user (consumer) finds an e-coupon issue center (200) by reading an ID with an opto-electrical transducer (101) associated with the consumer terminal (100). A keyboard can also enter the information. The cellular phone communicates with the issue center directly from the ID or through an ID resolution center (400)(or manufacturer) to request issuance of the e-coupon ID. The issue center after checking the ID, issues and transmits the e-coupon ID to the consumer terminal. The consumer uses the e-coupon ID and his own ID at a retailer (300) which accesses the issue center to determine the validity of the e-coupon. The user can receive and use an e-coupon while keeping personal information private by using an anonymous proxy server.

## Description

The present invention relates to an electronic coupon (e-coupon) method and system and, more particularly, to an e-coupon method and system wherein a consumer terminal is selectively coupled with an e-coupon issue center and a retailer terminal which is coupled with the e-coupon issue center.

In a proposed prior system using an e-coupon for a consumer to purchase an item from a store of a retailer, the store and a manufacturer or e-coupon issue center are connected by a network to authenticate e-coupons. Technical problems with such a system concern distribution, as well as how consumers hold and use the e-coupon.

In the system described in JP-A-11-328269 (Hitachi), the consumer first accesses a manufacturer by using the Internet to download an e-coupon. To obtain the e-coupon, the consumer sends a password to the manufacturer and the manufacturer, in turn, sends an encrypted password back to the consumer. The consumer prints the encrypted password on a paper, and brings the paper to a store. The retailer accesses the manufacturer or issue center on a private line, and the consumer in the store inputs a password which is collated by the manufacturer or the issue center for authentication of the e-coupon. There are obvious disadvantages to converting the e-coupon to paper coupons.

In JP-A-2000-67312 (IBM), the consumer writes the e-coupon acquired through the Internet onto a smart card. A store includes a smart-card reader which enables the card to be collated at the store for validity. This system requires the consumer to have a special smart card rather than a general utility, e.g., a cellular telephone.

In JP-A-2001-5883 (NTT Data), an e-coupon ID is converted into a barcode by the manufacturer. The barcode is downloaded onto a portable information terminal, e.g., a cellular phone, of a consumer. The consumer displays the barcode on the screen of the portable information terminal at a retailer's store which includes a barcode reader for the displayed barcode. There are certain disadvantages to the exchange between the consumer's cellular telephone and the barcode reader at the retailer.

An Internet user (i.e., consumer) who obtains an e-coupon from a manufacturer is usually required in these proposed prior art systems to actively access an Internet homepage of the manufacturer. From the homepage, the user must access another field to obtain information about a product of particular interest.

On the other hand, a traditional advertisement (publicity) medium, such as a magazine advertisement or street or highway billboard, is quite effective in capturing the eye of the consumer. These traditional advertisement media are effective in attracting the eye of the consumer even though they contain information the consumer receives passively. It is the present practice to place a URL (Uniform Resource Locator) on an Internet advertisement to try to lure a consumer to an Internet site. However, these Internet advertisements rarely achieve their goal because the consumer must actively access the Internet site.

It is anticipated that the design of cellular phones will change so the cellular phones will become portable, handheld information terminals carried by virtually everyone. It is expected that future cellular phones will include optical-electric transducers, e.g., small digital cameras, and local digital communication functions (e.g., short range wireless communication functions), such as, infrared-ray communication, Bluetooth or wireless LAN. One aspect of the present invention takes advantage of these excepted advances in cellular telephone technology.

The prior art e-coupon systems usually require the consumer to advise a product supplier from whom he wants to get e-coupons of his personal information, e.g., telephone number or e-mail address and name. This information is valuable customer information for the manufacturer, but private information as self-purchase history for the user. Many consumers are not willing to provide third parties with this information. For this reason, there is a need for an e-coupon system which enables the identity of e-coupon users to remain private.

It is an object of the present invention to provide a new and improved system for and method of requesting, receiving, authenticating and using an e-coupon.

Another object is to provide a new and improved system for and method of receiving and using an e-coupon without supplying private information, such as consumer's purchase history, to a manufacturer or retailer.

One aspect of the invention relates to an e-coupon system for use with a communication network arrangement, wherein the system includes a consumer terminal, an e-coupon issue center and a retailer terminal. Each of the consumer terminal, e-coupon issue center and retailer terminal includes (a) a memory, (b) an interface with the communication network arrangement, and (c) a processor for coupling signals between the memory and the interface of the respective terminal and the issue center. The interfaces, processors and memories of the consumer terminal and the e-coupon issue center are arranged so that first e-coupon information for a particular product stored in memory of the consumer terminal and identification of the consumer terminal coupled to the issue center from the consumer terminal causes the issue center to transmit second e-coupon information to the consumer terminal. The consumer terminal is arranged so that the second e-coupon information is stored in the consumer terminal memory. The interfaces, processors and memories of the consumer terminal and the retailer terminal are arranged so that in response to the consumer terminal coupling the identification of the consumer terminal and the second e-coupon information to the retailer terminal, the retailer terminal provides the e-coupon issue center with the second e-coupon information and the identification of the consumer terminal. The interface, processor and memory of the information center are arranged for (a) verifying the validity of the e-coupon in response to the consumer terminal providing the issue center terminal with consumer terminal identification that correlates with the second e-coupon information and (b) providing the verified validity to the retailer terminal.

The system can include an identification resolution center having an interface, processor and memory arranged to be coupled with the consumer terminal for coupling to the consumer terminal product identification information and information for accessing a designated e-coupon issue center associated with the type of advertising medium where information about the product appears. The consumer terminal interface, processor and memory are arranged to be responsive to the product identification information and e-coupon issue center accessing information coupled to it by the identification resolution center for (a) accessing the designated e-coupon issue center, and (b) providing the designated issue center with (i) the consumer terminal identification, (ii) the product identification information, and (iii) the type of advertising medium where information about the product appears. The e-coupon issue center interface, processor and memory are arranged to be responsive to (i) the consumer terminal identification, (ii) the product identification information, and (iii) the type of advertising medium where information about the product appears, as coupled to it from the consumer terminal, for (a) determining the validity of the e-coupon, and (b) coupling e-coupon identification information to the identified consumer terminal in response to the e-coupon being determined as being valid.

In the preferred embodiment, e-coupon identification information is included in the second e-coupon information. The first e-coupon information includes (i) the consumer terminal identification, (ii) the product identification information, and (iii) the type of advertising medium where information about the product appears.

Another aspect of the invention relates to an e-coupon method using a consumer terminal, an e-coupon issue center and a retailer terminal, wherein the consumer terminal stores signals indicative of first e-coupon information for a product. The method comprises: coupling signals indicative of (a) the first e-coupon information for the product and (b) the identification of the consumer terminal from the consumer terminal to the issue center via a communication network arrangement. Steps at the issue center include (a) determining from the signals coupled via the communication network arrangement the validity of the first e-coupon information for the product, (b) transmitting (via the communication arrangement) to the consumer terminal signals indicative of second e-coupon information in response to the issue center determining that the first e-coupon information is valid, and (c) storing signals indicative of the second e-coupon information as correlated with the identification of the consumer terminal. Steps at the consumer terminal include (a) storing a signal indicative of the second e-coupon information coupled to the consumer terminal via the communication arrangement by the issue center, and (b) coupling signals indicative of the second e-coupon information and the identification of the consumer terminal to a retailer via the communication network arrangement. At the retailer, signals indicative of the second e-coupon information and the identification of the consumer terminal are sent via the communication arrangement to the issue center in response to the signals coupled to the retailer from the consumer terminal via the communication arrangement indicative of the second e-coupon information and the identification of the consumer terminal. At the issue center, a determination is made from the signals indicative of the second e-coupon information and the identification of the consumer terminal coupled to the issue center from the retailer via the communication network arrangement as to the validity of the second e-coupon information. The issue center transmits an authorization signal from the issue center to the retailer via the network arrangement in response to step (a) at the issue center determining that the second e-coupon information is valid.

In a preferred embodiment, the network communication arrangement includes a local link at the retailer between the consumer terminal, which is in a handheld housing, and a terminal at the retailer. The second e-coupon information and the identification of the consumer terminal are sent from the consumer terminal to the retailer terminal via the local link. The network communication arrangement can also include a telephone link between the consumer terminal, which can be a cellular telephone, and an interface at the issue center. The first e-coupon information and the identification of the consumer terminal are sent from the consumer terminal to the issue center via the telephone link.

The consumer terminal includes an input device for loading the first e-coupon information into a memory at the consumer terminal.

In a preferred embodiment, the input device includes an optical-electric transducer and the first e-coupon information is loaded into the memory via the transducer by positioning the transducer so that the first e-coupon information in an advertisement for the product is in the field of view of the transducer.

A further aspect of the invention relates to a method of processing e-coupon information about a product in an e-coupon system including a consumer terminal and at least one e-coupon issue center. A first signal indicative of first e-coupon information read from an advertisement about the product is supplied to a memory of the consumer terminal. An e-coupon issue center is located by analyzing the first e-coupon information. The e-coupon issue center discovered on the basis of the analysis derives a second signal indicative of second e-coupon information about the product in response to the first signal. The second signal is coupled from the issue center to the consumer terminal via the network arrangement.

In a preferred embodiment, the system further includes an identification resolution center and the first e-coupon information is analyzed by determining if the first e-coupon information includes (1) an address of the issue center, (2) an identification of the product and (3) an identification of a medium where the advertisement appears. An identification of the advertisement is sent to the identification resolution center in response to the analysis indicating that the first e-coupon information does not include (1) an issue center address, (2) an identification of the product and (3) an identification of the medium where the advertisement appears. The identification resolution center responds to the identification of the advertisement by (1) searching a database correlating the identification of advertisements with e-coupon issue centers and (2) coupling the e-coupon issue center correlated with the identified advertisement from the identification resolution center to the consumer terminal via the communication network arrangement.

Preferably, the second e-coupon information includes identification information for an e-coupon associated with the product and the first e-coupon information is analyzed by determining if the first e-coupon information includes an identification of the product and an identification of a medium where the advertisement appears. The e-coupon information center issues a unique e-coupon identification in response to the analysis determining that the first e-coupon information includes an identification of the product and an identification of a medium where the advertisement appears, provided the product identification and medium identification are within a valid time interval for use of the e-coupon. The e-coupon identification is sent from the e-coupon information center to the consumer terminal.

An added aspect of the invention relates to a method of authenticating e-coupon information in an e-coupon system having a consumer terminal, an e-coupon issue center and a retailer terminal. The retailer terminal (1) receives from the consumer terminal signals indicative of a unique identification for an e-coupon associated with a product and a user identification, and (2) transmits to the e-coupon issue center signals indicative of the received unique identification for the e-coupon and the user identification. At the e-coupon issue center, there is a determination of whether the received unique identification for the e-coupon and the user identification correlate with each other. The e-coupon issue center transmits e-coupon verification information to the retailer terminal via the communication network in response to the determining step indicating that the unique identification for the e-coupon and the user identification correlate with each other.

An added aspect of the invention relates to a method of issuing an e-coupon in an e-coupon system having a consumer terminal, an e-coupon issue center and an anonymous proxy server capable of communicating with each other. The anonymous proxy server receives a product identification, an advertising medium identification and a user identification from the consumer terminal, and generates a pseudo user identification on the basis of the user identification. The proxy server supplies the user identification and pseudo user identification to a user identification correspondence table. The proxy server sends a message to the e-coupon issue center to direct the e-coupon issue center to record e-coupon information including e-coupon identification as well as product identification, advertising media identification and pseudo user identification. The e-coupon issue center sends the e-coupon identification and pseudo user identification to the consumer terminal.
Figure 1 is a diagram of one preferred embodiment of a system for performing the method of the present invention;
Figure 2 is a diagram of internal hardware of a consumer terminal in the system of Figure 1;
Figure 3 is a diagram of internal hardware of an e-coupon issue center in the system of Figure 1;
Figure 4 is a diagram of internal hardware of a retailer terminal in the system of Figure 1;
Figure 5 is a flow chart of operations performed by the system of Figure 1 to issue an e-coupon;
Figure 6 is a flow chart of operations performed by the system of Figure 1 to use an e-coupon;
Figure 7 is a diagram of another preferred embodiment of a system for performing the method of the present invention;
Figure 8 is a diagram of an exemplary ID to be used with the system of Figure 7;
Figure 9 is a diagram of an exemplary item list obtained by performing the method of the present invention; and
Figure 10 is a figure of an exemplary e-coupon management list obtained by performing the method of the present invention.

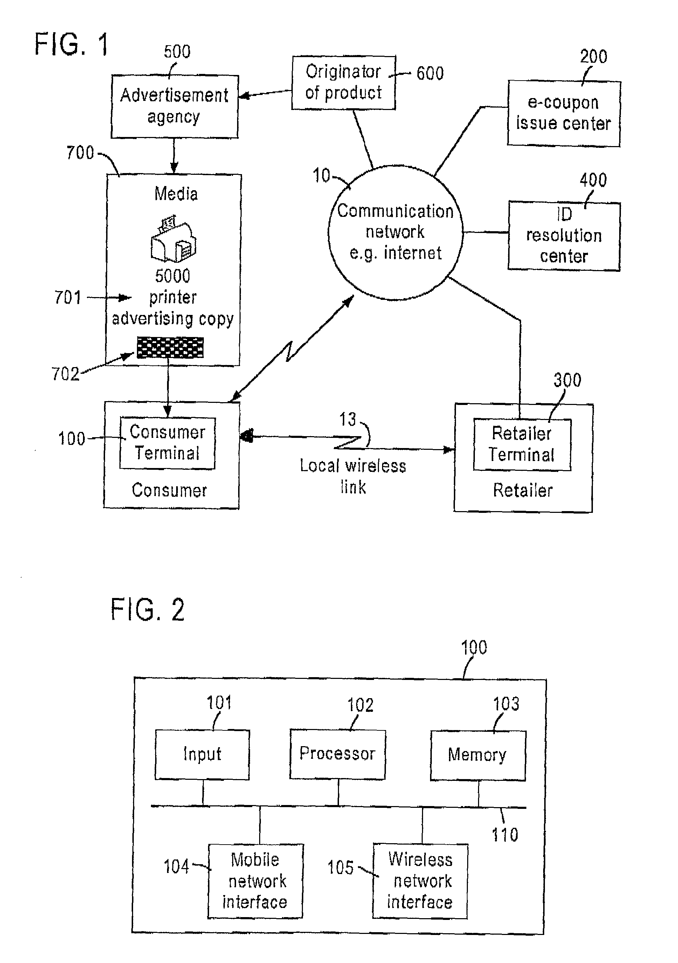

Figure 1 is a diagram of a first embodiment of an e-coupon system wherein a company 600 which manufactures and/or sells products (including goods and services) advertises the product through a publicity agent, e.g., publisher or advertisement agency 500. Company 600 uses e-coupon issue center 200 to issue, authenticate and manage e-coupons for the product. E-coupon issue center 200 can be one department of company 600 or a separate entity. A vendor of the product having a retail outlet sells the products sold by company 600. The store includes a retailer terminal 300 (usually a cash register) having a local communication link 13 with consumer terminal 100. Terminal 300 is also connected to e-coupon issue center 200 through communication network 10, such as a telephone network, a private network or the Internet.

Figure 2 is a block diagram of a typical internal hardware configuration at consumer terminal 100. The consumer terminal 100 is typically a portable, handheld information terminal such as a cellular phone or a personal digital assistant (PDA). Terminal 100 includes input device 101 for enabling a consumer utilizing terminal 100 to read from an advertisement of company 600 a product ID code, as well as input data and commands. Device 101 can be an optical energy to electric signal transducer, e.g., a reader in the form of a barcode reader or a digital camera, or a manually activated key input device, such as a keyboard. A mobile network interface 104 enables consumer terminal 100 to access communication network 10 through a wireless station (not shown).

Terminal 100 includes wireless network interface 105, a device for providing data communication between terminal 100 and retailer terminal 300 by a short range wireless communication link 13, such as an infrared communication link, Bluetooth or a wireless local area network (LAN). Terminal 100 includes memory 103 that stores the program or data to be used at terminal 100. Processor 102 of terminal 100 carries out necessary operation processing and controls the constituent elements of terminal 100 through bus 110.

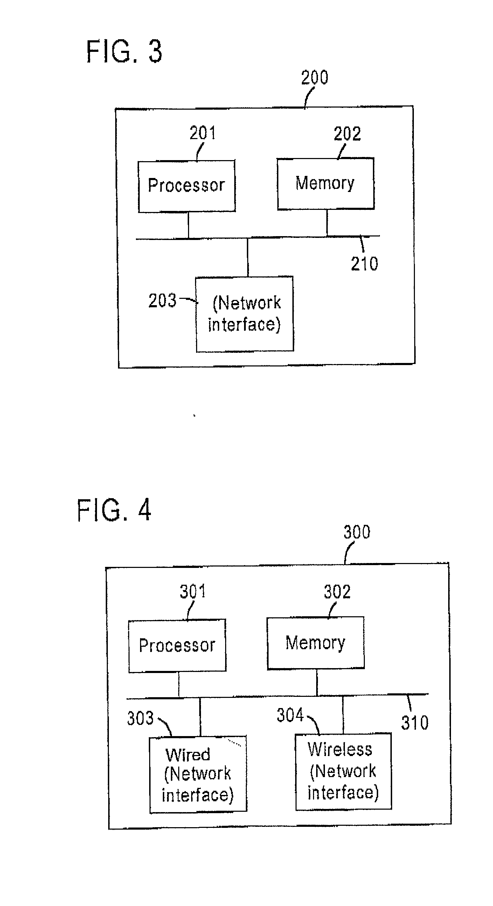

Figure 3 is a block diagram of the internal configuration of e-coupon issue center 200 including network interface 203, memory 202 and processor 201, connected to each other by bus 210. Network interface 203 allows e-coupon issue center 200 to access communication network 10. The memory 202 stores the program and data to be used in e-coupon issue center 200. Processor 201 carries out necessary operation processing and controls the constituent elements within e-coupon issue center 200.

Figure 4 is a diagram of the internal hardware configuration of retailer terminal 300 including wired network interface 303, wireless network interface 304, memory 302 and processor 301, connected to each other by bus 310. Wired network interface 303 allows retailer terminal 300 to access communication network 10. Wireless network interface 304 is a device for data communication with consumer terminal 100 through short range wireless communication link 13. Memory 302 stores the program and data used by retailer terminal 300. Processor 301 performs necessary operation processing and controls the constituent elements of retailer terminal 300.

Company 600 requests publicity agent 500 to advertise the product (see Figure 1). The advertisements include, for example, magazine and/or newspaper advertisements, posters, billboards and tram hanging bill advertisements. All of these types of advertisements are media 700 that can be printed on paper. The media 700 includes printed advertising copy 701 to promote a new product and printed discount coupon 702 for that product. The discount coupon is in the form of a barcode or two-dimensional symbol (similar to a checker board) including an e-coupon issue center address, an ID for the new product and an ID of the advertisement medium carrying coupon 702. The advertisement media ID identifies the type of medium where the advertisement appears, e.g., whether the advertisement is a poster, a billboard, a tram hanging bill or an advertisement in a magazine or newspaper; in the case of a magazine or newspaper advertisement, the magazine or newspaper name and issuance date are identified.

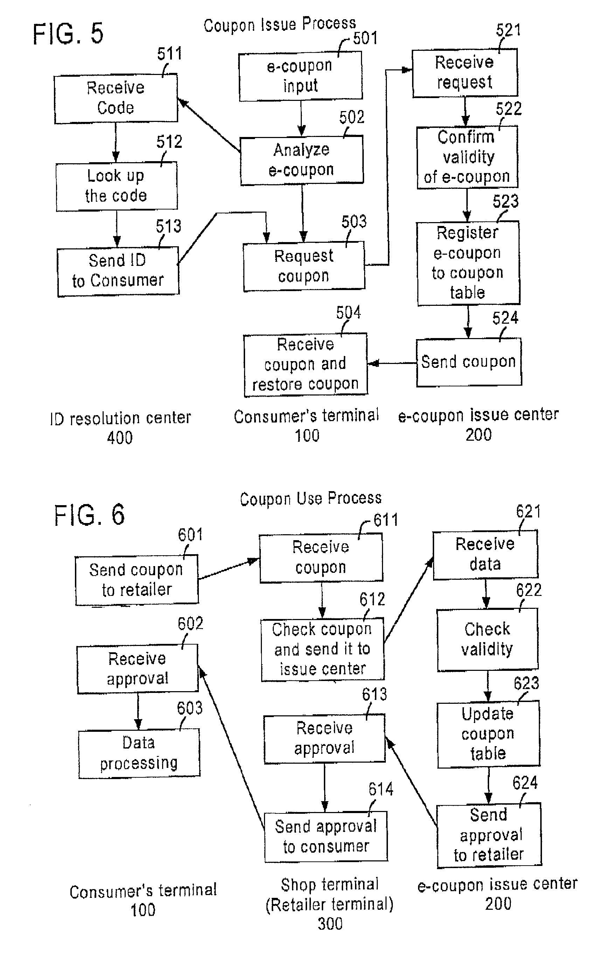

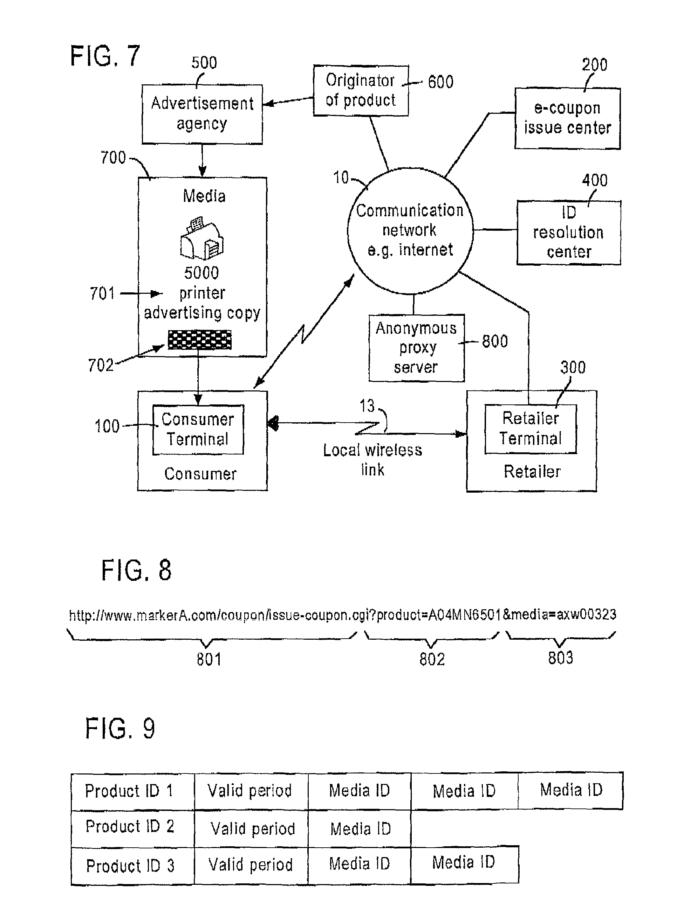

The printed coupon 702 can, e.g., include an e-coupon issue center address (URL), a new product ID and an advertisement media ID. One example of coupon 702 has a Web URL format, as illustrated in Figure 8. The first portion 801 of the URL format represents a file name of a URL of e-coupon issue center 200 and a CGI program for issuing e-coupons. The following portions 802 and 803 of the URL format respectively represent the product ID and media ID, which are to be passed as a CGI program argument. The CGI program is a program for the coupon issue processing (Figure 5) in the e-coupon issue center 200, discussed *infra.*

Another method can employ a code system arranged only in a business circle or company as an ISBN (International Standard Book Number) or product codes. In this case, a unique code is assigned to identify a product, media or advertisement *per se*. The code includes a string of numerals or characters to prevent the consumer from knowing an address of the e-coupon issue center 200 that issued the coupon. In this case, ID resolution center 400 is interposed to manage the IDs. The address (or telephone number or Internet address) of ID resolution center 400 is known and available for utilization by anyone. In response to issue center 200 sending to ID resolution center 400, center 400 sends a related URL back to center 200. In this case, a URL of the e-coupon issue center 200 is known from the product ID, or the URL of the e-coupon issue center 200; the product ID and media ID are known from an advertisement ID as in Figure 8.

The consumer, who has considered the advertisement and decided the product is of interest, reads the IDs and the issue center URL on the coupon and supplies the read information on the coupon to e-coupon issue center 200 by using portable information terminal 100, which is, e.g., a cellular phone. E-coupon issue center 200 responds to the information read by terminal 100 from the advertisements to issue an e-coupon. Figure 5 is a flow diagram of the procedures terminal 100, issue center 200 and resolution center 400 perform to issue an e-coupon. Figure 5 includes steps 501 to 504 that are performed at consumer terminal 100, steps 511 to 513 that are performed at ID resolution center 400 and steps 521 to 524 that are performed at e-coupon issue center 200. Memories 103 and 202 respectively store programs for controlling the processing by processors 102 and 201 at consumer terminal 100 and e-coupon issue center 200, respectively. Similarly, a memory (not shown), stores the program for controlling processing by a processor (not shown) at ID resolution center 400. While resolution center 400 is executing the program stored in its memory, ID resolution center 400 accesses communication network 10 by a network interface (not shown) center 400 includes.

During step 501, the consumer uses input device 101 at consumer terminal 100 to supply read first information about the e-coupon to the remainder of terminal 100. The first information is, e.g., an e-coupon ID and/or a series of characters. For example, input device 101 can read the first information from an advertisement during step 501. Terminal 100 then determines, on the basis of analysis step 502, whether or not the read ID contains (1) an address of an e-coupon issue center, such as center 200, (2) a product ID and (3) an advertisement ID. In response to the analysis of step 502 indicating (1), (2) and (3) were read, the program proceeds to step 503. In response to the analysis indicating (1), (2) and (3) were not read during step 502 but that (3) was read during step 502, terminal 100 sends ID resolution center 400 a message via network 10. The message includes the advertisement ID read during step 502.

During step 511, ID resolution center 400 responds to the advertisement ID it received from consumer terminal 100. Then, during step 512, center 400 searches through a database previously stored in the resolution center memory. The database at center 400 includes required e-coupon information, such as the address of e-coupon issue center 200, which is read from the resolution center memory to an interface at center 400. The interface at center 400 transmits, via network 100, the required information back to consumer terminal 100 (step 513). Next, during step 503, consumer terminal 100 responds to the address of e-coupon issue center 200 that terminal 100 receives from center 400. Terminal 100 then sends its user ID, the product ID and the media ID to the e-coupon issue center 200 having the address that terminal 100 (1) stored initially during input step 501 or (2) received from center 400 (step 521). The user ID is typically the cellular phone number or mail or e-mail address of the user.

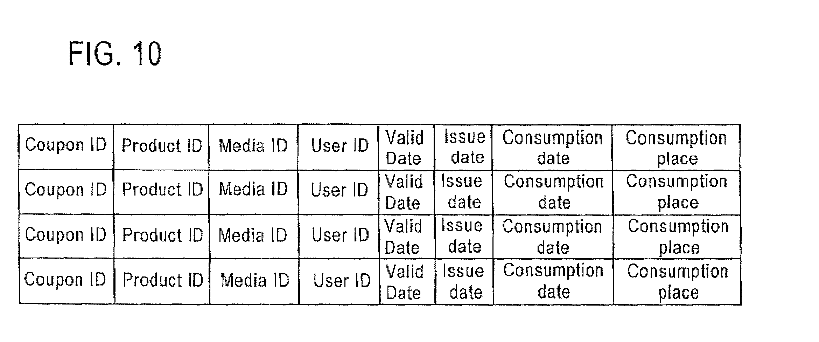

The e-coupon issue center 200 carries out an e-coupon issue process by using the item list shown in Fig. 9 and the e-coupon management list shown in Fig. 10. When issue center 200 initially receives a request from consumer terminal 100 (step 521), center 200 determines, during validity determining step 522, whether or not the product ID and media ID in the request are present in the item list and if the request is within a valid date associated with the coupon issued for the product. If step 522 determines the request is valid, center 200 issues an e-coupon that is ultimately transmitted to terminal 100. First, center 200 responds to the signal it receives from consumer terminal 100 to (1) generate a unique e-coupon ID and (2) read from its memory indications of the expiration date for the coupon and the date the e-coupon is being issued. Center 200 stores in its memory 202 signals indicative of the unique e-coupon ID, product ID, media ID, user ID, valid date and issue date in an e-coupon management list portion of its memory (step 523). Finally, during step 524, center 200 transmits via network 10 the unique e-coupon ID to consumer terminal 100. Consumer terminal 100, upon receiving the e-coupon ID from the e-coupon issue center 200, saves the e-coupon ID in its memory 103 (step 504).

If the consumer finds in a retail establishment a product of relevance to the e-coupon received during step 504, he/she uses the e-coupon, causing performance of the steps of the flow chart of Figure 6. The steps of Figure 6 are such that steps 601 to 603 are performed at consumer terminal 100, steps 611 to 614 are performed at retailer terminal 300 and steps 621 to 624 are performed at e-coupon issue center 200. The program for controlling processing at retailer terminal 300 is stored in memory 302 and executed by processor 301.

The consumer purchasing a product associated with the e-coupon tells a clerk, e.g., at a check-out counter of the retail establishment, that he/she has an e-coupon. The clerk then enables a local wireless communication link between consumer terminal 100 and retailer terminal 300. The local wireless communication link is typically a short range wireless communication link such as infrared-ray communication link, Bluetooth or a wireless LAN.

While the local wireless link is enabled, consumer terminal 100 initially, during step 601, sends the previously issued e-coupon ID and the ID of the user of terminal 100 to retailer terminal 300. Retailer terminal 300, during step 611, receives the e-coupon and user IDs and accesses the e-coupon issue center 200 to check the validity of the e-coupon (step 612). To enable center 200 to perform validity step 612, retailer terminal 300 uses network 10 to send to e-coupon issue center 200 the e-coupon ID and user ID received from the consumer's terminal 100 and the ID of the product the consumer wants to buy with the assistance of the e-coupon.

The e-coupon issue center 200, during step 621, receives the three IDs that terminal 300 transmits and, during step 622, confirms the e-coupon validity. If the received e-coupon ID is present in the e-coupon management list of Figure 10, as stored in memory 202, and processor 201 determines that the stored and received product ID and the user ID and e-coupon ID are all in agreement, i.e., match, the e-coupon can be correctly issued. Next, during step 623, processor 201 derives signals indicative of the time of day and date of issuance of the e-coupon and the retail establishment where the e-coupon is being used. Center 200 stores these signals in memory 202 to prevent further use of the e-coupon. During step 624, center 200 uses network 10 to send approval of the use of the e-coupon back to retailer terminal 300.

The retailer terminal 300, after receiving the approval from e-coupon issue center 200 during step 613, sends the approval to consumer terminal 100 during step 614 and displays e-coupon validity on a display screen (not shown) at retailer terminal 300. A clerk who views the display provides the e-coupon service, such as a price discount.

Consumer terminal 100, after receiving the approval during step 602, performs a post-process operation during step 603. During post-process step 603, processor 102 erases the used e-coupon ID from memory 103 or moves the used e-coupon ID to a used record list in memory 103.

The above is the procedure for e-coupon issue, reception, authentication and use. Consumer, i.e., portable information, terminal 100 enables an e-coupon to be issued to a consumer who looks at an advertisement that is either indoors or outdoors. Use of an e-coupon does not require the coupon to be printed on paper and does not require a consumer to carry a special device, such as a smart card. After completing the procedure for e-coupon issuance and use, a history of the procedure is stored in the e-coupon management list of e-coupon issue center 200. For the manufacturer, the stored history is important information to analyze consumer behavior and advertisement effectiveness. The consumer's purchase history, if available, can be utilized for after-sale service, direct mail notifying of new products and new service with e-coupon consuming amounts.

In the system of Figure 1, the consumer user ID is supplied to e-coupon issue center 200. Center 200 uses the e-coupon authentication and customer information for subsequent services. The customer information is a purchase history of "what items have been bought by oneself" for the consumer. However, there are consumers who do not want such private information to be provided to a third party, such as a manufacturer. For this reason, it is desirable to provide a system capable of keeping the secrecy of a user's personal information utilizing an e-coupon system.

Figure 7 is a diagram of such a system having an anonymous proxy server 800 which keeps the privacy of user's personal information. The other constituent elements of the system of Figure 7 are constructed the same and perform the same functions as the constituent elements designated by the same reference numerals in Figure 1. The system of Figure 7 includes a memory (not shown) that stores a program for controlling processing in anonymous proxy server 800. The program is executed by a processor (not shown) associated with server 800. Anonymous proxy server 800 can access communication network 10 by a network interface (not shown) provided in server 800. Anonymous proxy server 800 intervenes with the communications between consumer terminal 100 and e-coupon issue center 200 to replace a consumer user ID with a pseudo ID for the consumer.

Consumer terminal 100, upon requesting e-coupon issue, sends, via network 10, a product ID, media ID and its own user ID to anonymous proxy server 800 instead of to e-coupon issue center 200. Anonymous proxy server 800 responds to the request from consumer terminal 100 to issue an e-coupon by first generating a random user ID and connecting the original user ID to a pseudo user ID. The original user ID and the pseudo user ID are stored in an ID correspondence table in anonymous proxy server 800; the table stores a correspondence between the original and pseudo user IDs. To request an e-coupon, anonymous proxy server 800 uses network 10 to send to coupon issue center 200 three IDs, namely, the product ID, media ID and pseudo user ID. E-coupon issue center 200 deals with the pseudo user ID similarly to a usual user ID to update the e-coupon management list and send back to anonymous proxy server 800 an issued e-coupon ID. Anonymous proxy server 800 uses network 10 to send the e-coupon and pseudo user ID to the original consumer terminal 100. The pseudo user ID can be generated, for example, by using an issue date of an e-coupon or any randomly generated character string.

When a consumer uses the e-coupon in a store, the e-coupon ID and pseudo user ID are sent from portable information terminal 100 to retailer terminal 300 by a short range, i.e., local, communication link. In response to retailer terminal 300 sending the e-coupon ID, product ID and pseudo user ID to e-coupon issue center 200, center 200 correctly authenticates the user because the pseudo user ID is registered in the e-coupon management list in the memory of center 100. The correct authentication enables the consumer having the e-coupon to use the e-coupon.

For consumers, anonymous proxy server 800 serves as an Internet service provider to manage personal information. As a result of a contract between coupon issue center 200 and each individual user, the user ID for an individual is kept secret when the center issues an e-coupon. The arrangement assures e-coupon issue center 200, which may be owned by manufacturer 600, that the e-coupon is accurately delivered to the original user.

Anonymous proxy server 800 enables the e-coupon system to be used without passing an individual's user ID to manufacturer 600. Thus, manufacturer 600 cannot correlate the individual consumer to whom an e-coupon is issued with the e-coupon user. However, manufacturer 600 is apprised of the advertisement media ID and store where the unidentified consumer uses the e-coupon. These media ID and store indication data can be used for marketing.

If anonymous proxy server 800 includes a user management table, the server can handle correspondence between the pseudo user ID and the original user, after having issued an e-coupon. For example, when manufacturer 600 desires to forward a direct mail to an e-coupon consumer, the manufacturer forwards the direct mail with the pseudo user ID to anonymous proxy server 800, which then correlates the pseudo user ID with the original consumer and forwards the direct mail to the original consumer. Because the same pseudo user ID is assigned to the same original consumer, the repeated use of e-coupons by the original consumer enables manufacturer 600 to provide after sale information to the original consumer who remains anonymous. Of course, the original consumer can decide to use or not to use such after-sale information while remaining anonymous. Anonymous proxy server 800 can be arranged to enable the original consumer to selectively choose whether or not the after-sale information is to be sent to him/her by direct mail.

The above description was made on the assumption that consumer terminal 100, e-coupon issue center 200, retailer terminal 300, ID resolution center 400 and anonymous proxy server 800 communicate with one another through communication network 10. It is, however, to be understood that communication need not be through communication network 10 but can be through a direct communication line between the centers, terminals and server.

The coupon to be read by the portable, hand held information terminal 100, such as a cellular phone, can be displayed on a display screen of an electronic advertisement medium, such as a Web screen, next to coupons printed on paper advertisement media, such as newspapers, magazines and posters.

A specific example of how the system of Figure 1 operates is now described.

Assume that company A carries out a sale-promotion campaign in connection with release of a new printer. Company A decides it will provide a $5.00 discount to purchasers of the printer for a certain period after initial release of the printer. Company A carries out the discount campaign by using the e-coupon system, and asks company B to publicize the discount campaign to the world by using advertisement media, such as advertisements in magazines, tram bills and posters, i.e., billboards. The advertisements include publicity about features of the new printer and a printed e-coupon. The e-coupon is printed in the form of a barcode or two-dimensional symbol added to the advertising copy, e.g. "$5.00 discount available by purchasing the printer by (date)".

At the same time the advertising campaign is launched, company A updates an item list (Figure 9) it maintains in memory 202 at e-coupon issue center 200, so the item list includes an ID for the new printer, as well as media IDs and campaign terms, e.g., discount campaign expiration date. The updated information in the item list is used in checking for a valid date and request effectiveness when center 200 issues e-coupons later.

A consumer who has seen the product poster (billboard) in the street and is interested in the new printer points a miniature digital camera on or connected to portable information terminal 100 toward the barcode on the billboard and then activates the camera to obtain an image of the barcode. Input device 101 of terminal 100 reads the barcode image to derive information for enabling an issue center to issue an e-coupon, i.e. e-coupon issue center address (URL), product ID and advertisement media ID. These pieces of information, in some cases, have been directly converted into a barcode; in other cases, these pieces of information are IDs based on other coding systems. For example, if the product ID cannot be identified but the advertisement ID is available, it is not possible to specify an e-coupon issue center 200 of the manufacturer. In such a case, inquiry is made to ID resolution center 400 through a portable telephone communication device on portable information terminal 100, to derive the product ID and an e-coupon issue center ID or address, e.g., phone number and/or web site address of e-coupon issue center 200.

Next, consumer terminal 100 accesses the identified e-coupon issue center 200 through a cellular-phone network interface to carry out the e-coupon issuing procedure. On this occasion, terminal 100 sends a message including the product and media IDs and the consumer's own user ID to the issue center 200 identified in the read barcode. Thereupon, issue center 200 sends an e-coupon ID to terminal 100. Terminal 100 saves the e-coupon ID in memory 103. The e-coupon issue center 200, in response to receipt of an e-coupon issuance request from the consumer, looks up the product ID in the message item list shown in Figure 9. Center 200 checks the item list to determine whether the product ID sent from the user is in the item list, whether the media ID is in the list for the particular product and whether the expiration date has elapsed. The media ID is checked to confirm that the user has correctly looked at an advertisement to request an e-coupon.

Center 200, upon issuing the e-coupon, registers a unique ID for the e-coupon in an e-coupon list, Figure 10, in memory 202. The unique ID for each e-coupon is stored in the e-coupon list of memory 202 along with an item ID, a media ID, a consumer's user ID, an expiration date and an issue date of the e-coupon. Thereafter, center 200 sends the e-coupon ID to consumer terminal 100.

Upon receiving the e-coupon, consumer terminal 100 saves it to memory 103. At a later time, the consumer who possesses terminal 100 that stores the rebate e-coupon for the printer, purchases a printer in a store. At that time, the consumer tells a clerk at the store that he/she has an e-coupon for the printer and activates terminal 100 to send the e-coupon ID to the retailer terminal (cash register) 300 via wireless network interface 105. The retailer terminal 300 and the e-coupon issue center 200 are connected together by a telephone or a safe Internet link. Retailer terminal 300 sends the e-coupon ID, printer product ID and user ID to e-coupon issue center 200 via the network or link, to confirm the validity of the e-coupon.

Upon receiving the confirmation request message from retailer terminal 300, e-coupon processor 201 of issue center 200 accesses memory 202 to read the e-coupon list shown in Figure 10. Processor 201 compares the information in the request message from terminal 300 with information in the e-coupon list shown in Figure 10. If processor 201 determines there is an agreement in e-coupon ID, user ID and product ID and use of the e-coupon before the expiration date, the processor signals that the e-coupon is authorized. After processor 201 confirms the validity of the e-coupon, interface 203 of e-coupon issue center 200 sends an approval to retailer terminal 300. Upon receiving the approval, retailer terminal 300 transfers the approval to consumer terminal 100 and, at the same time, displays e-coupon validity on a display screen of retailer terminal 300. The clerk then performs the e-coupon service, e.g., reduces the price the consumer pays for the printer.

While there have been described and illustrated specific embodiments of the invention, it will be clear that variations in the details of the embodiments specifically illustrated and described may be made without departing from the scope of the invention as defined in the appended claims. For example, the consumer need not bring the e-coupon to a store of a retailer, but can communicate the e-coupon to a retailer via the Internet.

## Claims

1. A method of processing e-coupon information about a product in an e-coupon system including a consumer terminal and at least one e-coupon issue center, the consumer terminal and at least one e-coupon issue center being cable of communicating with each other via a communication network arrangement, the method comprising:
supplying a first signal indicative of first e-coupon information read from an advertisement about the product to a memory of the consumer terminal;
discovering an e-coupon issue center by analyzing the first e-coupon information;
the e-coupon issue center discovered on the basis of the analysis, deriving a second signal indicative of second e-coupon information about the product in response to the first signal ; and coupling the second signal from the issue center to the consumer terminal via the network arrangement.

2. The method of claim 1 wherein the system further includes an identification resolution center and the first e-coupon information is analyzed by determining if the first e-coupon information includes an address of the issue center, an identification of the product and an identification of a medium where the advertisement appears; sending an identification of the advertisement to the identification resolution center in response to the analysis indicating that the first e-coupon information does not include an issue center address, an identification of the product and an identification of the medium where the advertisement appears; at the identification resolution center responding to the identification of the advertisement by (a) searching a database correlating the identification of advertisements with e-coupon issue centers and (b) coupling the e-coupon issue center correlated with the identified advertisement from the identification resolution center to the consumer terminal via the communication network arrangement.

3. The method of claim 1 wherein the second e-coupon information includes identification information for an e-coupon associated with the product.

4. The method of claim 1 wherein the first e-coupon information is analyzed by determining if the first e-coupon information includes an identification of the product and an identification of a medium where the advertisement appears;
the e-coupon information center issuing a unique e-coupon identification in response to the analysis determining that the first e-coupon information includes an identification of the product and an identification of a medium where the advertisement appears, provided the product identification and medium identification are within a valid time interval for use of the e-coupon; and
sending the e-coupon identification from the e-coupon information center to the consumer terminal.

5. The method of claim 1 wherein the consumer terminal includes a cellular telephone which, via the communication network arrangement, transmits the first e-coupon information to the e-coupon information center and receives the second e-coupon information from the e-coupon information center.

6. The method of claim 1 wherein the consumer terminal is in a handheld housing including an optical-electric transducer, and supplying the first signal to the transducer by positioning the transducer to be responsive to optical energy from the advertisement.

7. In a method of authenticating e-coupon information in an e-coupon system having a consumer terminal, an e-coupon issue center and a retailer terminal, comprising at the retailer terminal (a) receiving from the consumer terminal signals indicative of a unique identification for an e-coupon associated with a product and a user identification, and (b) transmitting to the e-coupon issue center signals indicative of the received unique identification for the e-coupon and the user identification; at the e-coupon issue center (a) determining if the received unique identification for the e-coupon and the user identification correlate with each other, and (b) transmitting e-coupon verification information to the retailer terminal via the communication network arrangement in response to the determining step indicating that the unique identification for the e-coupon and the user identification correlate with each other.

8. The method of claim 7 wherein the consumer terminal is in a handheld housing that couples signals to the retailer terminal via a local network at a retailer site including the retailer terminal while the handheld housing is at the retailer site.

9. The method of claim 8 wherein the retailer terminal couples signals via the local network to the consumer terminal to cause the signals indicative of the unique identification for the e-coupon to be removed from the consumer terminal.

10. The method of claim 8 further including supplying a first signal indicative of first e-coupon information read from an advertisement about the product to a memory of the consumer terminal; the consumer terminal including an optical-electric transducer, and supplying the first signal to the transducer by positioning the transducer to be responsive to optical energy from the advertisement.

11. In a method of issuing an e-coupon in an e-coupon system, the system having a consumer terminal, an e-coupon issue center and an anonymous proxy server; said information terminal, said e-coupon issue center and said anonymous proxy server being capable of communicating with each other, wherein processing steps of said proxy server comprise:
receiving a product ID, a media ID and a user ID from said consumer terminal;
generating a pseudo user ID on the basis of said user ID;
supplying said user ID and said pseudo user ID to a user ID correspondence table;
requesting the e-coupon issue center to record e-coupon information including e-coupon ID, said product ID, said media ID and said pseudo user ID; and
sending said e-coupon ID received and said pseudo e-coupon ID to said portable information terminal.

12. The method of claim 11 wherein the proxy server sends said e-coupon ID and said pseudo e-coupon ID to said consumer terminal.

13. An e-coupon system for use with a communication network arrangement, the system comprising:
a consumer terminal, an e-coupon issue center and a retailer terminal, each of the consumer terminal, e-coupon issue center and retailer terminal including (a) a memory, (b) an interface with the communication network arrangement, and (c) a processor for coupling signals between the memory and the interface of the respective terminal and the issue center;
the interfaces, processors and memories of the consumer terminal and the e-coupon issue center being arranged so that first e-coupon information for a particular product stored in the memory of the consumer terminal and identification of the consumer terminal coupled to the issue center from the consumer terminal cause the issue center to transmit second e-coupon information to the consumer terminal, the consumer terminal being arranged so that the second e-coupon information is stored in the consumer terminal memory;
the interfaces, processors and memories of the consumer terminal and the retailer terminal being arranged so that in response to the consumer terminal coupling the identification of the consumer terminal and the second e-coupon information to the retailer terminal, the retailer terminal provides the e-coupon issue center with the second e-coupon information and the identification of the consumer terminal;
the interface, processor and memory of the information center being arranged for (a) verifying the validity of the e-coupon in response to the consumer terminal providing the issue center terminal with consumer terminal identification that correlates with the second e-coupon information and (b) providing the verified validity to the retailer terminal.

14. The system of claim 13 wherein the consumer terminal includes an input device for supplying signals to the consumer terminal indicative of the e-coupon information.

15. The system of claim 14 wherein the consumer terminal is in a housing that can be held by hand and the input device of the consumer terminal includes a transducer for converting optical information about the e-coupon to signals that can be stored in the memory of the consumer terminal.

16. The system of claim 13 wherein the consumer terminal is in a housing that can be held by hand and the communication arrangement between the consumer terminal and the retailer terminal comprises a local wireless link, and the interfaces of the consumer terminal and the retailer terminal include transducers for coupling energy between the consumer and retailer terminals via the local wireless link.

17. The system of claim 13 further including an anonymous proxy server having an interface for connection to the communication network for preventing the identity of the user of the consumer terminal from being known by the e-coupon issue center.

18. The system of claim 13 wherein the communication network includes the Internet and the interfaces of the retailer terminal and the e-coupon issue center include an Internet interface.

19. The system of claim 13 wherein the first e-coupon information includes information about a type of advertising medium where information about the product appears.

20. The system of claim 19 further including an identification resolution center having an interface, processor and memory arranged to be coupled with the consumer terminal for coupling to the consumer terminal product identification information and information for accessing a designated e-coupon issue center associated with the type of advertising medium where information about the product appears; the consumer terminal interface, processor and memory being arranged to be responsive to the product identification information and e-coupon issue center accessing information coupled to it by the identification resolution center for (a) accessing the designated e-coupon issue center, and (b) providing the designated issue center with (i) the consumer terminal identification, (ii) the product identification information, and (iii) the type of advertising medium where information about the product appears; the e-coupon issue center interface, processor and memory being arranged to be responsive to (i) the consumer terminal identification, (ii) the product identification information, and (iii) the type of advertising medium where information about the product appears, as coupled to it from the consumer terminal, for (a) determining the validity of the e-coupon, and (b) coupling e-coupon identification information to the identified consumer terminal in response to the e-coupon being determined as being valid; the e-coupon identification information being the second e-coupon information; the (i) the consumer terminal identification, (ii) the product identification information, and (iii) the type of advertising medium where information about the product appears being the first e-coupon information.

21. The system of claim 19 further including an identification resolution center having an interface, processor and memory arranged to be coupled with the consumer terminal for coupling to the consumer terminal product identification information; the consumer terminal interface, processor and memory being arranged to be responsive to the product identification information coupled to it by the identification resolution center for (a) accessing the e-coupon issue center, and (b) providing the issue center with (i) the consumer terminal identification, (ii) the product identification information, and (iii) the type of advertising medium where information about the product appears; the e-coupon issue center interface, processor and memory being arranged to be responsive to (i) the consumer terminal identification, (ii) the product identification information, and (iii) the type of advertising medium where information about the product appears, as coupled to it from the consumer terminal, for (a) determining the validity of the e-coupon, and (b) coupling e-coupon identification information to the identified consumer terminal in response to the e-coupon being determined as being valid; the e-coupon identification information being the second e-coupon information; the (i) the consumer terminal identification, (ii) the product identification information, and (iii) the type of advertising medium where information about the product appears being the first e-coupon information.

22. The system of claim 13 wherein the first e-coupon information comprises information about the consumer terminal identification, the product identification information, and the type of advertising medium where information appears about the product, and the second e-coupon information comprises e-coupon identification information.

23. An e-coupon method using a consumer terminal, an e-coupon issue center and a retailer terminal, the consumer terminal storing signals indicative of first e-coupon information for a product, the method comprising:
coupling signals indicative of (a) the first e-coupon information for the product and (b) the identification of the consumer terminal from the consumer terminal to the issue center via a communication network arrangement;
at the issue center, (a) determining from the signals coupled via the communication network arrangement the validity of the first e-coupon information for the product, (b) transmitting via the communication arrangement to the consumer terminal signals indicative of second e-coupon information in response to the issue center determining that the first e-coupon information is valid, and (c) storing signals indicative of the second e-coupon information as correlated with the identification of the consumer terminal;
at the consumer terminal, (a) storing a signal indicative of the second e-coupon information coupled to the consumer terminal via the communication arrangement by the issue center, and (b) coupling signals indicative of the second e-coupon information and the identification of the consumer terminal to a retailer via the communication network arrangement;
at the retailer, responding to the signals coupled to the retailer from the consumer terminal via the communication arrangement indicative of the second e-coupon information and the identification of the consumer terminal by sending via the network arrangement to the issue center signals indicative of the second e-coupon information and the identification of the consumer terminal;
at the issue center, (a) determining from the signals indicative of the second de-coupon information and the identification of the consumer terminal coupled to the issue center from the retailer via the communication network arrangement the validity of the second e-coupon information, (b) transmitting an authorization signal from the issue center to the retailer via the network arrangement in response to step (a) at the issue center determining that the second e-coupon information is valid.

24. The method of claim 23 wherein the network communication arrangement includes a local link at the retailer between the consumer terminal and a terminal at the retailer, the second e-coupon information and the identification of the consumer terminal being sent from the consumer terminal to the retailer terminal via the local link.

25. The method of claim 23 wherein the network communication arrangement includes a telephone link between the consumer terminal and an interface at the issue center, the first e-coupon information and the identification of the consumer terminal being sent from the consumer terminal to the issue center via the telephone link.

26. The method of claim 23 wherein the consumer terminal includes an input device and further comprising loading the first e-coupon information into a memory at the consumer terminal via the input device.

27. The method of claim 26 wherein the input device includes an optical-electric transducer and the first e-coupon information is loaded into the memory via the transducer by positioning the transducer so that the first e-coupon information in an advertisement for the product is in the field of view of the transducer.

28. The method of claim 23 wherein the first e-coupon information includes information about the type of advertising medium where information about the product appears, and the second e-coupon information comprises e-coupon identification information.

29. The method of claim 23 wherein the method uses an identification resolution center that couples to the consumer terminal product information in response to the consumer terminal coupling, via the communication arrangement, to the identification resolution center e-coupon information indicative of an advertisement for the product.

30. The method of claim 23 wherein the first e-coupon information includes product identification information and information indicative of an advertisement for the product.
